(19) Europäisches Patentamt
European Patent Office
Office européen des brevets

(11) EP 0 876 200 B1

(12) **EUROPÄISCHE PATENTSCHRIFT**

(45) Veröffentlichungstag und Bekanntmachung des Hinweises auf die Patenterteilung:
**29.12.1999 Patentblatt 1999/52**

(21) Anmeldenummer: **96937261.4**

(22) Anmeldetag: **26.10.1996**

(51) Int. Cl.[6]: **B01F 17/00**

(86) Internationale Anmeldenummer:
**PCT/EP96/04675**

(87) Internationale Veröffentlichungsnummer:
**WO 97/16242 (09.05.1997 Gazette 1997/20)**

(54) **NICHTIONISCHE EMULGATOREN**
NON-IONIC EMULSIFIERS
EMULSIFIANTS NON IONIQUES

(84) Benannte Vertragsstaaten:
**AT BE CH DE DK ES FR GB GR IE IT LI NL PT SE**

(30) Priorität: **28.10.1995 DE 19540320**

(43) Veröffentlichungstag der Anmeldung:
**11.11.1998 Patentblatt 1998/46**

(73) Patentinhaber:
**Herberts Gesellschaft
mit beschränkter Haftung
42285 Wuppertal (DE)**

(72) Erfinder:
- **DIENER, Wolfgang
D-42113 Wuppertal (DE)**
- **DUECOFFRE, Volker
D-42119 Wuppertal (DE)**
- **FLOSBACH, Carmen
D-42115 Wuppertal (DE)**
- **HEY, Gerhard
D-50737 Köln (DE)**
- **SCHUBERT, Walter
D-42349 Wuppertal (DE)**

(74) Vertreter:
**Türk - Gille - Hrabal - Struck
Patentanwälte - European Patent Attorneys,
Brucknerstrasse 20
40593 Düsseldorf (DE)**

(56) Entgegenhaltungen:
**EP-A- 0 054 869** **EP-A- 0 077 909**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 876 200 B1

## Beschreibung

Die Erfindung betrifft wäßrige Kunstharzemulsionen, enthaltend nicht-ionische Emulgatoren auf der Basis von Fettsäureestern polyalkoxylierter mehrwertiger Alkohole als Grundbausteinen, ihre Herstellung und ihre Verwendung.

Nicht-ionische Emulgatoren zur Stabilisierung von dispersen Systemen sind schon lange in der Literatur bekannt. Neben den linear aufgebauten Fettalkohol- und Alkylphenolalkoxylaten sind Emulgatoren auf der Basis von mit Fettsäuren veresterten mehrwertigen Alkoholen wie z.B. Glycerin, Pentaerythrit, Sorbitol und deren Folgeprodukten (z.B. Sorbitan und seinen Isomeren, s. HOUBEN-WEYL) zu nennen, die sich dadurch auszeichnen, daß stabile Emulsionen mit geringeren Mengen Emulgator herstellbar sind als bei der Verwendung der linearen Typen. Die Fettsäuren in diesen Emulgatoren können gesättigt oder ungesättigt sein. Beispiele sind Palmitinsäure, Stearinsäure, Laurinsäure oder Linol-bzw. Linolensäure und Ricinensäure. Die Alkoxylierung erfolgt durch Ethylenoxid und/oder Propylenoxid. Der Alkoxylierungsgrad liegt zwischen 10 und 100. Alkoxylierte Fettsäureester mehrwertiger Alkohole sind z.B. polyethoxylierte Sorbitan-Fettsäureester, die unter den Bezeichnungen TWEEN (Handelsname der Fa. ICI) kommerziell erhältlich sind. Ihr Aufbau und Ihre Herstellung sind beschrieben in:

| | |
|---|---|
| Paul Becher: | Encyclopedia of Emulsion-Technology Vol. 1<br>S. 337 ff.<br>M. Dekker Inc. New York, Basel, 1983 |
| Kozo Shinoda & Stig Friberg: | Emulsion & Solubilisation<br>S. 74 ff.<br>Joh. Wiley & Son, 1986 |
| Drew Myers: | Surfactant Science and Technology<br>S. 67 ff.<br>VCH Publishers, Inc. 1988 |
| Dr. R. Reusch in: | Ullmann Enzylklopädie der technischen Chemie Band 10, S. 449-473<br>Verlag Chemie, Weinheim, 1975 |
| Dr. M. Quadvlieg: | "Emulgieren, Emulgatoren" in HOUBEN-WEYL: "Methoden der organischen Chemie"<br>S. 97 ff.<br>Bd.I/2, Thieme-Verlag, Stuttgart<br>4. Auflage, 1959. |

US-A-3 647 477
US-A-2 374 931
US-A-2 380 166

Die Ethoxylierung kann erfolgen durch Umsetzung OH-funktioneller Grundkörper (Fettsäuren, Fettalkohole, mehrwertige Alkohole und ihre Folgeprodukte, wie z.B. Sorbitan) mit Polyalkylenoxiden, wie z.B. Polyethylenoxid oder durch Polyalkoxylierung der o.g. Grundkörper mit Ethylenoxid und/oder Propylenoxid unter basischer Katalyse und Druck.

Beispiele für ethoxylierte Sorbitan-Fettsäureester sind z.B. die Handelsprodukte TWEEN 20 (Sorbitan-monolaurat mit 20 mol Ethylenoxid) und Atlas G-4252 mit 80 mol Ethylenoxid. Solche Emulgatoren werden im Folgenden als Grundbausteine bezeichnet, aus denen die erfindungsgemäßen Emulgatoren aufgebaut sind.

Nachteil dieser Emulgatoren bei der Herstellung von Kunstharzemulsionen zur Formulierung von Lacken, insbesondere Decklacken, ist die erforderliche hohe Einsatzmenge, was zu drastischen Einbußen bei Bewitterungsstabilität und anderen lacktechnischen Parametern führt. Eigene Versuche haben nun gezeigt, daß durch Vergrößerung des Molekulargewichtes durch Verknüpfung der Grundbausteine diese Nachteile weitgehend behoben werden können. So ist unter der Handelsbezeichnung "G1350" (ICI) ein Emulgator erhältlich auf Basis ethoxylierter Sorbitanfettsäureester, bei dem die Grundbausteine durch Umsetzung mit Phthalsäureanhydrid zu höhermolekularen Strukturen aufgebaut sind und der ein Gewichtsmittel des Molekulargewichts Mw von 17000 aufweist. Hier werden stabile Emulsionen bereits bei Einsatzmengen von 3 %, bezogen auf die zu emulgierende Phase, erhalten, während bei Verwendung der entsprechenden Grundbausteine mindestens 10-20 %, bezogen auf die zu emulgierende Phase, erforderlich sind. Von Nachteil bei diesem Emulgator ist die durch den chemischen Aufbau bedingte Neigung zur Vergilbung des Lackfilms und zur Ausbildung stark strukturierter Oberflächen, was besonders bei Decklacken stört und die Verwendung dieses Emulgators hier stark einschränkt. Desweiteren sind Decklacke, in denen dieser Emulgator enthalten ist, sehr hydrolyseempfindlich.

Aufgabe der Erfindung ist es daher, Kunstharzemulsionen bereitzustellen, die diese Nachteile nicht besitzen und insbesondere auch die Herstellung sehr glatter Oberflächen mit gutem Decklackstand erlauben.

Diese Aufgabe wird gelöst durch nichtionische Emulgatoren der eingangs genannten Art, die dadurch gekennzeichnet sind, daß mindestens zwei Grundbausteine durch Umsetzung von Hydroxylgruppen mit einem Polyisocyanat unter Bildung von Urethanbindungen miteinander verknüpft sind. Vorteilhafte Ausgestaltungen der Emulgatoren ergeben sich aus den Unteransprüchen.

Bevorzugte Polyalkylenoxide sind Polyoxyethylen (POE) und Polyoxypropylen (POP) oder Blockcopolymere aus POE und POP. Der Alkoxylierungsgrad liegt zwischen 25 und 300, bevorzugt zwischen 30 und 200.

Die Fettsäuren können gesättigter und ungesättigter Natur sein. Die Kettenlänge liegt zwischen $C_6$ und $C_{24}$. Beispiele hierfür sind Palmitinsäure, Stearinsäure, Laurinsäure, Linol- und Linolensäure und Ricinensäure. Bevorzugt werden gesättigte Fettsäuren verwendet. Besonders bevorzugt wird Laurinsäure verwendet.

Die Kerneinheit der erfindungsgemäß zu verwendenden Emulgatoren besteht aus Polyolen, die entweder linear oder verzweigt sein können. Bevorzugte Polyole haben die allgemeine Zusammensetzung $C_nH_{2n+2}O_n$, wie Glycerin (n=3), Trimethylolpropan, Pentaerythrit, Sorbitol (n=6). Besonders bevorzugt werden cyclische Kondensationsprodukte dieser Polyole wie z.B. Sorbitan und seine Isomeren eingesetzt. Neben den einfachen Polyolen eignen sich auch polymere Polyole wie z.B. Polyglycerine als hydroxyfunktionelle Kerne der Emulgatoren. Die Molgewichte derartiger Polyole liegen üblicherweise zwischen 92 und 1000.

Bevorzugte Grundbausteine sind alkoxylierte Sorbitanfettsäureester mit gesättigten Fettsäuren. Besonders bevorzugte Grundbausteine sind daher Sorbitan-Monolaurate mit Alkoxylierungsgraden von 25 bis 300 mol Alkylenoxid je mol Emulgator, entsprechend einem MW (GPC-Polystyrol) von 500 bis 14000.

Ihre Zusammensetzung entspricht einem Molverhältnis von Sorbitol : Laurinsäure : Alkylenoxid = 1 : 1 : 25 - 300.

Die Grundbausteine werden zur Molekulargewichtserhöhung mit Polyisocyanaten umgesetzt. Beispiele für erfindungsgemäß einsetzbare Polyisocyanate sind cycloaliphatische, aliphatische oder aromatische Polyisocyanate wie 1,2-Propylendiisocyanat, 2,3-Butylendiisocyanat, Tetramethylendiisocyanat, 1,6-Hexamethylendiisocyanat, 2,2,4-Trimethylendiisocyanat, 1,12-Dodecandiisocyanat, Cyclohexan-1,3- und 1,4-diisocyanat, 1-Isocyanato-3,3,5-trimethyl-5-isocyanatomethylcyclohexan (= Isophorondiisocyanat IPDI), Perhydro-2,4' - und/oder -4,4'-diphenylmethandiisocyanat, 1,3- und 1,4-Phenylendiisocyanat, 2,4- und 2,6-Toluylendiisocyanat, Diphenylmethan-2,4'- und/oder -4,4'-diisocyanat, 3,2'- und/oder 3,4-Diisocyanato-4-methyl-diphenylmethan, Naphthylen-1,5-diisocyanat, m-Xylylendiisocyanat, p-Xylylendiisocyanat, Triphenylmethan-4,4'-triisocyanat, Tetramethylxylylendiisocyanat, Lysindiisocyanat oder Gemische dieser Verbindungen. Bevorzugt sind aliphatische und cycloaliphatische Polyisocyanate. Neben diesen einfachen Isocyanaten sind auch solche geeignet, die Heteroatome in dem die Isocyanatgruppen verknüpfenden Rest enthalten. Beispiele hierfür sind Carbodiimidgruppen, Allophanatgruppen, Isocyanuratgruppen, Urethangruppen, acylierte Harnstoffgruppen und Biuretgruppen aufweisende Polyisocyanate.

Ebenfalls für die Erfindung geeignet sind die bekannten Polyisocyanate, die hauptsächlich bei der Herstellung von Lacken eingesetzt werden, z.B. Biuret-, Isocyanurat- oder Urethangruppen aufweisende Modifizierungsprodukte der oben genannten einfachen Polyisocyanate, insbesondere Tris-(6-Isocyanatohexyl)-biuret sowie die Isocyanurate von 1,6-Hexamethylen- oder Isophorondiisocyanat, oder niedermolekulare, Urethangruppen aufweisende Polyisocyanate, wie sie durch Umsetzung von im Überschuß eingesetzten IPDI mit einfachen mehrwertigen Alkoholen des Molekulargewichtsbereiches 62 bis 300, insbesondere mit Trimethylolpropan erhalten werden können. Selbstverständlich können auch beliebige Gemische der genannten Polyisocyanate zur Herstellung der erfindungsgemäß zu verwendenden Emulgatoren eingesetzt werden.

Geeignete Polyisocyanate sind ferner die bekannten, endständige Isocyanatgruppen aufweisende Prepolymere, wie sie insbesondere durch Umsetzung der oben genannten einfachen Polyisocyanate, vor allem Diisocyanate, mit unterschüssigen Mengen an organischen Verbindungen mit mindestens zwei gegenüber Isocyanatgruppen reaktionsfähigen Gruppen zugänglich sind. Als solche kommen bevorzugt insgesamt mindestens zwei Aminogruppen und/oder Hydroxylgruppen aufweisende Verbindungen mit einem Zahlenmittel der Molmasse von 300 bis 10000, vorzugsweise 400 bis 6000, zur Anwendung. Bevorzugt werden die entsprechenden Polyhydroxylverbindungen, z.B. die in der Polyurethanchemie an sich bekannten Hydroxypolyester, Hydroxypolyether und/oder hydroxylgruppenhaltige Acrylatharze, verwendet.

In diesen bekannten Prepolymeren entspricht das Verhältnis von Isocyanatgruppen zu gegenüber NCO reaktiven Wasserstoffatomen 1,05 bis 10 : 1, vorzugsweise 1,1 bis 3 : 1, wobei die Wasserstoffatome vorzugsweise aus Hydroxylgruppen stammen. Die Art und Mengenverhältnisse der bei der Herstellung der NCO-Prepolymeren eingesetzten Ausgangsmaterialien werden im übrigen vorzugsweise so gewählt, daß die NCO-Prepolymeren eine mittlere NCO-Funktionalität von 0,5 bis 4, vorzugsweise von 1,2 bis 3 und ein Zahlenmittel der Molmasse von 500 bis 10000, vorzugsweise von 800 bis 4000 aufweisen.

Ebenfalls möglich ist die Verwendung von Copolymeren des vinylisch ungesättigten Monoisocyanates Dimethyl-m-isopropenylbenzylisocyanat, wie sie unter anderem in der DE-A-41 37 615 beschrieben sind.

Die Isocyanatgruppen der eingesetzten Polyisocyanate sind gegebenenfalls teilweise verkappt. Es können übliche Verkappungsmittel verwendet werden, z.B. 1,2-Propandiol, Malonsäuredimethylester, Malonsäurediethylester, Acetessigsäureethylester und/oder Butanonoxim sowie die weitere, dem Fachmann geläufigen Verkappungsmittel.

Als weitere Verkappungsmittel kommen Verbindungen in Frage, die nur eine einzige Amin-, Amid-, Imid-, Lactam-, Thio- oder Hydroxylgruppe enthalten. Beispiele sind aliphatische oder cycloaliphatische Alkohole, wie n-Butanol, Isopropanol, tert.-Butanol, Furfurol, 2-Ethylhexanol, Cyclohexanol, Phenole, Kresol, tert.-Butylphenole, Dialkylaminoalkohole wie Dimethylaminoethanol, Oxime wie Methylethylketoxim, Acetonoxim, Cyclohexanonoxim, Acetophenonoxim, Lactame wie epsilon-Caprolactam oder Pyrrolidon-2, Imide wie Phthalimid oder N-Hydroxy-maleinimid, Hydroxyalkylester, Hydroxamsäuren und deren Ester, N-Alkylamide wie Methylacetamid, Imidazole wie 2-Methylimidazol, Pyrazole wie 2,3-Dimethylpyrazol. Es können aber auch Gemische dieser Verkappungsmittel eingesetzt werden.

Das Molverhältnis der aciden Wasserstoff enthaltenden Blockierungsmittel zu den NCO-Gruppen der Isocyanate kann variiert werden, beispielsweise von 0,1 bis 0,5 : 1.

Die Umsetzung der Grundbausteine mit Polyisocyanat erfolgt beispielsweise so, daß eine Schmelze bzw. organische Lösung der Grundbausteine in aprotischen Lösemitteln vorgelegt wird und bei erhöhten Temperaturen beispielsweise bei 80°C, tropfenweise mit dem Polyisocyanat, das gegebenenfalls in organischen Lösemitteln gelöst ist, versetzt wird. Der Reaktionsverlauf wird anhand des NCO-Gehaltes kontrolliert. Die Reaktion wird beispielsweise bis zu einem NCO-Gehalt < 0,1 % geführt. Nach beendeter Reaktion kann der entstandene Emulgator gegebenenfalls vom organischen Lösemittel durch Destillation befreit und mit Wasser verdünnt werden. Beispiele für einsetzbare Lösemittel sind organische Lösemittel, wie aliphatische und aromatische Kohlenwasserstoffe, beispielsweise Xylol, Gemische aliphatischer und/oder aromatischer Kohlenwasserstoffe, Ester, Ether. Bevorzugt wird die Reaktion lösemittelfrei durchgeführt. Falls die Grundbausteine von ihrem Herstellungsprozeß her Wasser enthalten, sollte es vor der Umsetzung mit Polyisocyanaten weitgehend, beispielsweise bis zu einem Gehalt von maximal 2 % entfernt werden. Geeignete Entwässerungsmethoden sind dem Fachmann geläufig, z.B. azeotrope Entwässerung mit einem Schleppmittel wie z.B. Xylol, destillative Trocknung, Gefriertrocknung oder Einsatz von Trockenmitteln. Um den Einfluß von eventuell enthaltenen basischen Katalysatoren, die aus dem Herstellprozeß der Grundbausteine stammen können, zurückzudrängen, kann es sinnvoll sein, diese durch Zugabe von organischen oder anorganischen Säuren, wie zum Beispiel Essigsäure und/oder Phosphorsäure zu neutralisieren. Durch die Umsetzung der Grundbausteine mit Di-, In- oder Polyisocyanaten werden die Molekulargewichte erhöht. Die Molgewichte der entstehenden Emulgatoren liegen in einem Bereich von Mw (Gewichtsmittel des Molekulargewichtes) von 20.000 bis 150.000.

Die erfindungsgemäß einzusetzenden Emulgatoren eignen sich zur Emulgierung verschiedenster Bindemittel. Die Bindemittel können frei von funktionellen Gruppen sein und rein physikalisch trocknen oder mit funktionellen Gruppen ausgestattet sein. Funktionalisierte Bindemittel können selbst- oder fremdvernetzbar sein. Im Falle der fremdvernetzenden Bindemittel können Bindemittel und Vernetzer entweder über eine längere Zeitspanne zusammen vorliegen (einkomponentige Formulierung) oder erst kurz vor der Applikation gemischt werden (zweikomponentige Formulierung). Bindemittel und Vernetzer können beide mit dem Emulgator emulgiert werden, es ist aber auch möglich, eine der beiden Komponenten auf anderem Wege, z.B. ionisch, zu stabilisieren oder aber eine Komponente wasserfrei einzusetzen, so daß diese Komponente keinen Emulgator benötigt.

Bei den Bindemitteln, die mit dem erfindungsgemäß zu verwendenden Emulgator emulgiert werden können, kann es sich z.B. um Polyurethane, Polyester, Polyether, Polyesterpoly(meth)acrylate oder Poly(meth)acrylate sowie um Gemische dieser Bindemittel handeln. Die Bindemittel können z.B. hydroxyl-, carboxyl-, epoxy-, amino-, acryloylfuntionell und/oder CH-acide sein. Ebenso ist eine Kombination verschiedener funktioneller Gruppen möglich.

Beispiele für hydroxylfunktionelle Bindemittel sind Polyetherpolyole, Polyacetalpolyole, Polyesteramidpolyole, Polyamidpolyole, Epoxidharzpolyole oder deren Umsetzungsprodukte mit CO, Phneolharzpolyole, Polyharnstoffpolyole, Polyurethanpolyole, Celluloseester und -etherpolyole, teilweise verseifte Homo- und Copolymerisate von Vinylestern, teilweise acetalisierte Polyvinylalkohole, Polycarbonatpolyole, Polyesterpolyole, Polyesterpoly(meth)acrylpolyole oder Poly(meth)acrylpolyole. Bevorzugt sind Polyetherpolyole, Polyesterpolyole, Polyesterpoly(meth)acrylpolyole, Poly(meth)acrylpolyole und Polyurethanpolyole. Derartige Polyole, die auch in Mischung eingesetzt werden können sind beispielsweise in der DE-OS 31 24 784 beschrieben.

Beispiele für Polyurethanpolyole ergeben sich aus der Umsetzung von Di- und Polyisocyanaten mit einem Überschuß an Di- und/oder Polyolen. Geeignete Isocyanate sind z.B. Hexamethylendiisocyanat, Isophorondiisocyanat, Toluylendiisocyanat als auch Isocyanate, gebildet aus drei Molen eines Diisocyanats wie Hexamethylendiisocyanat oder Isophorondiisocyanat und Biurete, die aus der Reaktion von drei Molen eines Diisocyanates mit einem Mol Wasser hervorgehen. Weitere verwendbare Isocyanate sind bereits im Text beschrieben.

Geeignete Polyharnstoffpolyole können in ähnlicher Weise durch Umsetzen von Di- und Polyisocyanaten mit äquimolaren Mengen von Aminoalkoholen, z.B. Ethanolamin oder Diethanolamin, erhalten werden.

Beispiele für Polyesterpolyole sind die bekannten Polykondensate aus Di- oder Polycarbonsäuren oder deren Anhydriden, wie Phthalsäureanhydrid oder Adipinsäure, und Polyolen wie Ethylenglykol, Trimethylolpropan oder Glycerin.

Geeignete Polyamidpolyole können in ähnlicher Weise wie die Polyester erhalten werden, in dem man die Polyole zumindest teilweise durch Polyamine wie Isophorondiamin, Hexamethylendiamin oder Diethylentriamin ersetzt.

Beispiele für Poly(meth)acrylatpolyole oder OH-gruppenhaltige Polyvinylverbindungen sind die bekannten Copolymerisate aus hydroxylgruppenhaltigen (Meth)Acrylsäureestern oder Vinylalkohol und anderen Vinylverbindungen, wie z.B. Styrol oder (Meth)Acrylsäureestern.

Beispiele für Polyesterpoly(meth)acrylpolyole sind Poly(meth)acrylate, die in Gegenwart eines oder mehrerer Polyesterharze synthetisiert werden. Geeignete (Meth)acrylmonomere werden weiter unten im Zusammenhang mit COOH-funktionellen (Meth)acrylatpolyolen beschrieben.

Hydroxylfunktionelle Bindemittel können mit allen Vernetzern, die zur Reaktion mit OH-Gruppen befähigt sind, reagieren. Beispiele für solche Vernetzer sind z.B. Polyisocyanate, wie sie bereits bei der Umsetzung der Grundbausteine mit Polyisocyanaten beschrieben wurden, blockierte Polyisocyanate, Umesterungsvernetzer wie z.B. Umsetzungsprodukte von Polyisocyanaten mit Acetessigsäureethylester oder Malonsäurediethylester, Umsetzungsprodukte von Acetessigsäureethylester mit Polyolen, Tris(alkoxycarbonylamino)triazin sowie Aminharze. Beispiele für Melaminharze sind z.B. Methyl-veretherte Melaminharze, wie die Handeisprodukte Cymel 325, Cymel 327, Cymel 350 und Cymel 370, Maprenal MF 927.

Weitere Beispiele für verwendbare Melaminharze sind butanol- oder isobutanolveretherte Melamine wie z.B. die Handeisprodukte Setamin US 138 oder Maprenal MF 610; mischveretherte Melmainharze, die sowohl butanol- als auch methanolverethert sind, wie z.B. Cymel 254, sowie Hexamethyloxymethylmelamin (HMM-Melamine) wie z.B. Cymel 301 oder Cymel 303, wobei letztere zur Vernetzung einen externen Säurekatalysator wie z.B. p-Toluolsulfonsäure benötigen können, der gegebenenfalls mit Aminen oder Polyepoxiden ionisch oder nicht-ionisch blockiert sein kann.

Beispiele für carboxyfunktionalisierte Bindemittel sind carboxyfunktionalisierte Poly(meth)acrylcopolymere und/oder carboxyfunktionalisierte Polyester bzw. Polyurethane.

Bei der Herstellung der carboxylgruppenhaltigen Poly(meth)acrylcopolymeren bzw. Polyester können die Carboxylgruppen direkt durch Verwendung carboxylgruppenhaltiger Bausteine, beispielsweise beim Aufbau von Polymeren, wie (Meth)acrylcopolymeren, eingeführt werden. Beispiele für hierzu verwendbare geeignete carboxylgruppenhaltige Monomere sind ungesättigte Carbonsäuren, wie z.B. Acryl-, Methacryl-, Itacon-, Croton, Isocroton-, Aconit-, Malein- und Fumarsäure, Halbester der Malein- und Fumarsäure sowie β-Carboxyethylacrylat und Addukte von Hydroxyalkylestern der Acrylsäure und/oder Methacrylsäure mit Carbonsäureanhydriden, wie z.B. der Phthalsäure-mono-2-methacryloyl-oxyethylester.

Bei der Herstellung der carboxylgruppenhaltigen (Meth)acrylcopolymere, Polyurethane bzw. Polyester ist es aber auch möglich, zunächst ein hydroxy- und gegebenenfalls carboxylgruppenhaltiges Polymer zu synthetisieren und die Carboxylgruppen ganz oder teilweise in einer zweiten Stufe durch Umsetzen der hydroxyl- und gegebenenfalls carboxylgruppenhaltigen Polymeren mit Carbonsäureanhydriden einzuführen.

Für die Addition an die hydroxylgruppenhaltigen Polymeren geeignete Carbonsäureanhydride sind die Anhydride von aliphatischen, cycloaliphatischen und aromatischen gesättigten und/oder ungesättigten Di- und Polycarbonsäuren, wie beispielsweise die Anhydride der Phthalsäure, Tetrahydrophthalsäure, Hexahydrophthalsäure, Bernsteinsäure, Maleinsäure, Itaconsäure, Glutarsäure, Trimellithsäure und Pyromellithsäure sowie deren halogenierte oder alkylierte Derivate. Bevorzugt eingesetzt werden Anhydride der Phthalsäure, Tetrahydro- und Hexahydrophthalsäure sowie 5-Methylhexahydrohthal säureanhydrid.

Beispiele für geeignete Hydroxyalkylester α,β-ungesättigter Carbonsäuren mit primären Hydroxylgruppen zur Herstellung hydroxyfunktioneller Poly(meth)acrylate sind Hydroxyethylacrylat, Hydroxypropylacrylat, Hydroxybutylacrylat, Hydroxyamylacrylat, Hydroxyhexylacrylat, Hydroxyoctylacrylat und die entsprechenden Methacrylate. Als Beispiele für verwendbare Hydroxyalkylester mit einer sekundären Hydroxylgruppe seien 2-Hydroxypropylacrylat, 2-Hydroxybutylacrylat, 3-Hydroxybutylacrylat und die entsprechenden Methacrylate genannt.

Vorteilhafterweise kann die hydroxylfunktionalisierte Komponente zumindest teilweise ein Umsetzungsprodukt aus einem Mol Hydroxyethylacrylat und/oder Hydroxyethylmethacrylat und durchschnittlich zwei Molen epsilon-Caprolacton sein. Als hydroxyfunktionalisierte Komponente kann zumindest teilweise auch ein Umsetzungsprodukt aus Acrylsäure und/oder Methacrylsäure mit dem Glycidylester einer Carbonsäure mit einem tertiären α-Kohlenstoffatom eingesetzt werden. Glycidylester stark verzweigter Monocarbonsäuren sind unter dem Handelsnamen "Cardura E" erhältlich. Die Umsetzung der Acrylsäure oder Methacrylsäure mit dem Glycidylester einer Carbonsäure mit einem tertiären α-Kohlenstoff kann vor, während oder nach der Polymerisationsreaktion erfolgen.

Bei der Herstellung der (Meth)acrylcopolymere können neben den vorstehend genannten Monomeren auch weitere ethylenisch ungesättigte Monomere verwendet werden. Die Auswahl der weiteren ethylenisch ungesättigten Monomeren ist nicht kritisch. Es muß nur darauf geachtet werden, daß der Einbau dieser Monomeren nicht zu unerwünschten Eigenschaften des Copolymerisats führt.

Als weitere ethylenisch ungesättigte Komponente geeignet sind insbesondere Alkylester der Acryl- und

Methacrylsäure, wie z.B. Methyl(meth)acrylat, Ethyl(meth)acrylat, Propyl(meth)acrylat, Butyl(meth)acrylat, Isopropyl(meth)acrylat, Isobutyl(meth)acrylat, Pentyl(meth)acrylat, Hexyl(meth)acrylat, Cyclohexyl(meth)acrylat, 2-Ethylhexyl(meth)acrylat, Octyl(meth)acrylat, 3,5,5-Trimethylhexyl(meth)acrylat, Decyl(meth)acrylat, Dodecyl(meth)acrylat, Hexadecyl(meth)acrylat, Octadecyl(meth)acrylat und Octadecenyl(meth)acrylat. Statt der vorstehend genannten Alkylester der Acryl- und Methacrylsäure oder zusammen mit diesen Alkylestern können zur Herstellung von (Meth)acrylcopolymerisaten weitere ethylenisch ungesättigte Monomere eingesetzt werden, wobei sich die Auswahl dieser Monomeren weitgehend nach den gewünschten Eigenschaften der Überzugsmittel in Bezug auf Härte, Elastizität, Verträglichkeit und Polarität richtet.

Beispiele für weitere, geeignete ethylenisch ungesättigte Monomere sind die Alkylester der Malein-, Fumar-, Tetrahydrophthal-, Croton-, Isocroton-, Vinylessig- und Itaconsäure, wie z.B. entsprechenden Methyl-, Ethyl, Propyl, Butyl, Isopropyl-, Isobutyl-, Pentyl-, Amyl-, Isoamyl-, Hexyl-, Cyclohexyl-, 2-Ethylhexyl-, Octyl-, 3,5,5-Trimethylhexyl-, Decyl-, Dodecyl-, Hexadecyl-, Octadecyl- und Octadecenylester.

Eine weitere geeignete Komponente ist eine monovinylaromatische Verbindung. Vorzugsweise enthält sie 8 bis 10 Kohlenstoffatome je Molekül. Beispiele für geeignete Verbindungen sind Styrol, Vinyltoluole, $\alpha$-Methylstyrol, Chlorstyrole, o-, m- oder p-Methylstyrol, 2,5-Dimethylstyrol, p-Methoxystyrol, p-tert.-Butylstyrol, p-Mdimethylaminostyrol, p-Acetamidostyrol und m-Vinylphenol. Bevorzugt werden Vinyltoluole sowie insbesondere Styrol eingesetzt.

Die carboxylgruppenhaltigen Polyester können nach den üblichen Methoden (vgl. z.B. B. Vollmert, Grundriß der makromolekularen Chemie, E. Vollmert-Verlag Karlsruhe 1982, Band II, Seite 5 ff.) aufgebaut werden aus aliphatischen und/oder cycloaliphatischen Di-, Tri- oder höherwertigen Alkoholen, gegebenenfalls zusammen mit einwertigen Alkoholen und aus aliphatischen, aromatischen und/oder cycloaliphatischen Carbonsäuren sowie höherwertigen Polycarbonsäuren. Beispiele für geeignete Alkohole sind Ethylenglykol, 1,2-Propandiol, 1,3-Propandiol, 2,2-Dimethyl-1,3-propandiol, 1,2-Butandol, 1,3-Butandiol, 1,4-Butandiol, 1,5-Pentandiol, 3-Methyl-1,5-pentandiol, 1,6-Hexandiol, 2-Ethyl-1,6-hexandiol, 2,2,4-Trimethyl-1,6-hexandiol, 1,4-Dimethylolcyclohexan, Glycerin, Trimethylethan, Trimethylolpropan, Pentaerythrit, Veretherungsprodukte von Diolen und Polyolen, z.B. Di- und Triethylenglykol, Polyethylenglykol, Neopentylglykolester von Hydroxypivalinsäure.

Beispiele für geeignete Carbonsäuren sind Adipin-, Azelain, 1,3- und 1,4-Cyclohexandicarbonsäuren, Tetrahydrophthal-, Hexahydrophthal-, Endomethylentetrahydrophthalsäure, Isophthalsäure, o-Phthalsäure, Terephthalsäure bzw. deren Anhydride sowie deren veresterungsfähige Derivate.

Beispiele für carboxylfunktionelle Polyurethane ergeben sich aus der Umsetzung von Di- und Polyisocyanaten mit einem Überschuß an Di- und/oder Polyolen und Hydroxycarbonsäuren, eine besonders gut geeignete Hydroxycarbonsäure ist Dimethylolpropionsäure. Geeignete Isocyanate sind z.B. Hexamethylendiisocyanat, Isophorondiisocyanat, Toluylendiisocyanat und auch Isocyanurate, gebildet aus drei Molen eines Diisocyanats wie Hexamethylendiisocyanat oder Isophorondiisocyanat, und Biurete, die aus der Reaktion von drei Malen eines Diisocyanats mit einem Mol Wasser hervorgehen.

Die carboxylfunktionellen Bindemittel können mit dem Fachmann geläufigen Vernetzern für carboxylgruppenhaltige Verbindungen vernetzt werden. Beispiele für solche Vernetzer sind epoxyfunktionelle Bindemittel, die noch im folgenden näher beschrieben werden, und Aminharze, wie sie bereits als Vernetzer für hydroxylfunktionelle Bindemittel beschrieben wurden.

Beispiele für epoxyfunktionelle Bindemittel sind di- oder polyfunktionelle Epoxyverbindungen, die hergestellt werden durch Verwendung von beispielsweise di- oder polyfunktionellen Epoxyverbindungen, wie Digylcidyl- oder Polyglycidylether von (cyclo)aliphatischen oder aromatischen Hydroxyverbindungen wie Ethylenglykol, Glycerol, 1,2- und 1,4-Cyclohexandiol, Bisphenole wie Bisphenol A, Polyglycidylether von Phenolformaldehyd-Novolaken, Polymere ethylenisch ungesättigter Verbindungen, die Epoxy-Gruppen enthalten, wie Glycidyl(meth)acrylat, N-Glycidyl(meth)acrylat, und/oder Allylglycidylether, wahlweise copolymerisiert mit verschiedenen anderen ethylenisch ungesättigten Monomeren, Glycidylether von Fettsäuren mit 6 bis 24 C-Atomen, epoxidierte Polyalkandiene, wie epoxidiertes Polybutadien, Hydantoin-Epoxy-Harze, glycidylgruppenhaltige Harze, wie Plyester oder Polyurethane, die eine oder mehrere Glycidylgruppen pro Molekül enthalten, und Gemische der genannten Harze und Verbindungen.

Gegebenenfalls kann die Vernetzung der carboxylgruppenhaltigen Harze mit den Epoxy-funktionellen Komponenten mit Katalysatoren, die beispielsweise in einer Menge zwischen 0,1 % und 10 %, bezogen auf den Gesamtfestharzgehalt eingesetzt werden, zusätzlich katalysiert werden.

Beispiele für solche Katalysatoren sind z.B. Phosphoniumsalze wie Benzyltriphenylphoniumacetat, -chlorid, -bromid oder -iodid oder z.B. Ammoniumverbindungen wie z.B. Tetraethylammoniumchlorid oder -fluorid.

Epoxyfunktionelle Bindemittel können auch mit anderen dem Fachmann geläufigen Vernetzern vernetzen, z.B. neben den bereits beschriebenen carboxylfunktionellen auch mit aminofunktionellen Komponenten.

Beispiele für aminofunktionelle Komponenten sind Polyamine mit mindestens zwei funktionellen Gruppen der Formel RHN-, worin R ein Wasserstoffatom oder ein gerader oder verzweigter Alkylrest mit 1 bis 10 Kohlenstoffatomen oder Cycloalkylrest mit 3 bis 8, bevorzugt 5 oder 6 Kohlenstoffatomen sein kann.

Geeignete Polyamine sind Diamine und Polyamine mit mindestens zwei Aminogruppen, wobei die Aminogruppen primär und/oder sekundär sein können. Darüber hinaus sind als Polyamine beispielsweise auch Addukte geeignet, die aus Polyaminen mit mindestens zwei primären Aminogruppen und mindestens einer, bevorzugt einer, sekundären Aminogruppe bestehen, mit Epoxyverbindungen, Polyisocyanaten und Acryloylverbindungen. Darüber hinaus sind auch Aminoamide und Addukte aus carboxyfunktionalisierten Acrylaten und Aminen geeignet, die mindestens zwei Aminogruppen aufweisen.

Beispiele für geeignete Di- und Polyamine sind beispielsweise in den EP-A-0 240 083 und EP-A-0 346 982 beschrieben. Beispiele hierfür sind aliphatische und/oder cycloaliphatische Amine mit 2 bis 24 C-Atomen, die 2 bis 10 primäre Aminogruppen, bevorzugt 2 bis 4 primäre Aminogruppen, und 0 bis 4 Aminogruppen enthalten.

Repräsentative Beispiele hierfür sind Ethylendiamin, Propylendiamin, Butylendiamin, Pentamethylendiamin, Hexamethylendiamin, 4,7-Dioxadecan-1,10-diamin, 1,2-Diaminocyclohexan, 1,4-Diaminocyclohexan, Isophorondiamin, Diethylentriamin, Dipropylentriamin, 2,2-Bis-(4-aminocyclohexyl)propan; Polyether-Polyamine, z.B. solche mit dem Handelsnamen Jeffamine der Jefferson Chemical Company, Bis-(3-aminopropyl)ethylamin, 3-Amino-1-(methylamino)-propan und 3-Amino-1-(cyclohexylamino)propan.

Geeignet sind auch gebräuchliche Polyamine auf der Basis von Addukten von polyfunktionellen Aminkomponenten mit di- oder polyfunktionellen Epoxyverbindungen, beispielsweise solche, die hergestellt werden unter Verwendung von beispielsweise di- oder polyfunktionellen Epoxyverbindungen, wie di-glycidyl- oder Polyglycidylether von (cyclo)aliphatischen oder aromatischen Hydroxyverbindungen wie Ethylenglykol, Glycerol, 1,2- und 1,4-Cyclohexandiol, Bisphenole wie Bisphenol A, Polyglycidylether von Phenolformaldehyd-Novolaken, Polymere ethylenisch ungesättigter Gruppen, die Epoxygruppen enthalten, wie Glycidyl(meth)acrylat, N-Glycidyl(meth)acrylamid und/oder Allylglycidylether, wahlweise copolymerisiert mit verschiedenen anderen ethylenisch ungesättigten Monomeren, Glycidylether von Fettsäuren mit 6 bis 24 C-Atomen, epoxidierte Polyalkandiene, wie epoxidiertes Polybutadien, Hydantoin-Epoxy-Harze, Glycidyl-gruppenhaltige Harze, wie Polyester oder Polyurethane, die eine oder mehrere Glycidylgruppen pro Molekül enthalten, und Gemische der genannten Harze und Verbindungen.

Die Anlagerung der Polyamine an die genannten Epoxyverbindungen erfolgt unter Ringöffnung der Oxirangruppierung. Die Reaktion kann beispielsweise in einem Temperaturbereich von 20 bis 100°C erfolgen, bevorzugt aber zwischen 20 und 60°C. Gegebenenfalls kann mit 0,1 bis 2 Gew. -% einer Lewis-Base wie Triethylamin oder einem Ammoniumsalz wie Tetrabutylammoniumiodid katalysiert werden. Geeignete Polyamine sind auch Polyamin-Isocyanat-Addukte. Gebräuchliche Isocyanate für Polyamin-Isocyanat-Addukte sind aliphatische, cycloaliphatische und/oder aromatische Di-, Tri- oder Tetraisocyanate, die ethylenisch ungesättigt sein können. Beispiele hierfür sind 1,2-Propylendiisocyanat, Trimethylendiisocyanat, Tetramethylendiisocyanat, 2,3-Butylendiisocyanat, 1,6-Hexamethylendiisocyanat, 2,2,4-Trimethylhexamethylendiisocyanat, 2,4,4-Trimethylhexamethylendiisocyanat, omega,omega'-Dipropyletherdiisocyanat, 1,3-Cyclopentandiisocyanat, 1,2- und 1,4-Cyclohexandiisocyanat, Isophorondiisocyanat, 4-Methyl-1,3-diisocyanatcyclohexan, Transvinylidendiisocyanat, Dicyclohexylmethan-4,4'-diisocyanat, 3,3'-Dimethyl-dicyclohexylmethan-4,4'-diisocyanat, Toluylendiisocyanat, 1,3-Bis(1-isocyanato-1-methyl-ethyl)benzol, 1,4-Bis(1-isocyanato-1-methylethyl)benzol, 4,4'-Diisocyanatodiphenyl, 3,3'-dichloro-4,4'-diisocyanatodiphenyl, Addukte aus 2 Molen eines Diisocyanates, z.B. Hexamethylendiisocyanat oder Isophorondiisocyanat an ein Mol eines Diols, z.B. Ethylenglykol, das Addukt aus 3 Molen Hexamethylendiisocyanat an 1 Mol Wasser (erhältlich unter dem Handelsnamen Desmodur N von der Bayer AG), das Addukt aus 1 Mol Trimethylolpropan und 3 Molen Toluylendiisocyanat (erhältlich unter dem Handelsnamen Desmodur L von der Bayer AG) und das Addukt aus 1 Mol Trimethylolpropan und 3 Molen Isophorondiisocyanat.

Die Anlagerung von Polyaminen an die genannten Isocyanatverbindungen erfolgen beispielsweise in einem Temperaturbereich von 20 bis 80°C, bevorzugt 20 bis 60°C. Gegebenenfalls kann durch Zugabe von 0,1 bis 1 Gew. -% eines tertiären Amins, wie Triethylamin und/oder 0,1 bis 1 Gew. - % einer Lewis-Säure, die Dibutylzinnlaurat, katalysiert werden.

Wie erwähnt, können die Polyamine auch Addukte mit Acryloylverbindungen sein. Beispiele für di- oder polyfunktionelle acryloylungesättigte Verbindungen zum Herstellen von Polyaminaddukten sind in der US-PS 4 303 563 beschrieben, z.B. Ethylenglykoldiacrylat, Diethylenglykoldiacrylat, Trimethylenglykoldiacrylat, 1,3-Butylenglykoldiacrylat, 1,6-Hexamethylenglykoldiacrylat, Trimethylolpropantriacrylat, Pentaerythrittetraacrylat und Pentaerythrittriacrylat. Weitere Beispiele für verwendbare polyfunktionelle acryloyl-ungesättigte Verbindungen sind:

1. Urethanacrylate, erhalten durch die Reaktion einer Isocyanatgruppe eines Polyisocyanates mit einem Hydroxyacrylat, z.B. Hexamethylendiisocyanat und Hydroxyethylacrylat; die Herstellung ist beschrieben in US-PS 3 297 745.

2. Polyetheracrylate, erhalten durch Umesterung eines hydroxyterminierten Polyethers mit Acrylsäure, beschrieben in US-PS 3 380 831.

3. Polyesterarylat, erhalten durch Veresterung eines hydroxylgruppenhaltigen Polyesters mit Acrylsäure, beschrieben in US-PS 3 935 173.

4. Polyfunktionelle Acrylate, erhalten durch die Reaktion eines hydroxylfunktionalisierten Acrylates, wie z.B. Hydroxyethylacrylat mit

a) Dicarbonsäuren mit 4 bis 15 C-Atomen,
b) Polyepoxiden mit terminalen Glycidylgruppen,
c) Polyisocyanaten mit terminalen Isocyanatgruppen, beschrieben in US-PS 3 560 237.

5. Acrylat-terminierte Polyester, erhalten durch die Reaktion von Acrylsäure, einem Polyol mit mindestens zwei Hydroxyfunktionen und einer Dicarbonsäure, beschrieben in US-PS 3 567 494.

6. Polyacrylat, erhalten durch die Reaktion von Acrylsäure mit einem Epoxidfunktionen enthaltenden epoxidiertem Öl, wie Sojabohnenöl oder Leinsamenöl, beschrieben in US-PS 3 125 592.

7. Polyacrylat, erhalten durch die Reaktion von Acrylsäure mit Epoxidgruppen eines Diglycidylethers von Bisphenol A, beschrieben in US-PS 3 373 075.

8. Polyacrylat, erhalten durch die Reaktion von Acrylsäure an ein Epoxid-funktionalisiertes Vinylpolymer, z.B. Polymere mit Glycidylacrylat oder Vinylglycidylether, beschrieben in US-PS 3 530 100.

9. Polyacrylat, erhalten durch die Reaktion von Acrylsäureanhydrid mit Polyepoxiden, beschrieben in US-PS 3 676 398.

10. Acrylat-Urethanester, erhalten durch die Reaktion eines Hydroxyalkylacrylates, mit einem Diisocyanat und einem hydroxylfunktionalisierten Alkydharz, beschrieben in US-PS 3 676 140.

11. Acrylat-Urethanpolyester, erhalten durch die Reaktion eines Polycaprolactondiols- oder -triols mit einem organischen Polyisocyanat und mit einem Hydroxyalkylacrylat, beschrieben in US-PS 3 700 634.

12. Urethan-Polyacrylat, erhalten durch die Reaktion eines hydroxyfunktionalisierten Polyesters mit Acrylsäure und einem Polyisocyanat, beschrieben in US-PS 3 759 809.

Die Acryloyl-Endgruppen der Di- bzw. Polyacrylmonomeren bzw. der Polyacrylate aus den Beispielen 1 bis 12 können mit Polyaminen funktionalisiert werden. Die Anlagerung kann z.B. in einem Temperaturbereich von 20 bis 100°C, bevorzugt bei 40 bis 60°C erfolgen.

Eine weitere Methode zur Synthese eines Amin-funktionalisierten Härters ist in der EP-A-0 2801 beschrieben. Hier werden Acrylsäureestercopolymere mit Diaminen unter Alkoholabspaltung amidisiert. Das Acrylsäureestercopolymere besitzt ein Zahlenmittel des Molgewichts Mn von 1000 bis 10000, bevorzugt 1000 bis 5000. Beispiele für mögliche Comonomere sind Ester der (Meth)acrylsäure wie z.B. Methyl-, Ethyl-, Butyl-, Cyclohexyl(meth)acrylat, Hydroxyethyl(meth)acrylat, Hydroxypropyl (meth)acrylat, weiterhin (Meth)acrylsäure, Styrol und Vinyltoluol. Besonders bevorzugt ist Methylacrylat, da dieses Monomer der Aminolyse besonders leicht zugänglich ist. Der Anteil an Methylacrylat am Copolymeren beträgt 2 bis 35 Gew. -%. Die Herstellung der Copolymere erfolgt durch Lösungspolymreisation in üblichen Lösungsmitteln wie Toluol, Xylol, Acetaten, z.B. Butylacetat oder Ethylglykolacetat, Ethern wie Tetrahydrofuran oder Aromatengemischen wie ein Handelsprodukt Solvesso 100. Die Synthese der Copolymere ist dem Fachmann bekannt und bedarf keiner weiteren Erläuterung. Die Polyamine, die bei der Aminolyse eingesetzt werden, müssen mindestens zwei primäre oder sekundäre Amingruppen enthalten und wurden bereits zuvor beschrieben.

Weitere aminfunktionelle Verbindungen entstehen als Reaktionsprodukte aus der Umsetzung eines (Meth)acrylsäurecopolymeren mit Alkyleniminen, wie sie in der EP-A-0 179 954 beschrieben werden. Neben (Meth)acrylsäure kann das Copolymer Ester der (Meth)acrylsäure oder Vinylverbindungen wie Styrol enthalten. Die beispielsweise verwendbaren Comonomeren wurden bereits bei der Definition der hydroxylgruppenhaltigen Poly(meth)acrylate beschrieben. Beispiele für Alkylenimine sind z.B. Propylen- oder Butylenimin.

Beispiele für als Härter verwendbare Polyamine sind auch solche, die hergestellt werden durch Umsetzung von Copolymeren von α-Dimethyl-m-isopropenylbenzylisocyanat (TMI), die ein Zahlenmittel des Molgewichts (Mn) von 1000 bis 10000 aufweisen, mit Mono- oder Diketiminen, die entweder eine OH- oder sek. NH-Gruppierung enthalten.

Als Comonomere zur Herstellung der TMI-Copolymeren können alle üblichen vinylisch polymerisierbaren Monomeren ohne OH-Funktionalität verwendet werden, wie beispielsweise Ester der (Meth)acrylsäure wie z.B. Methyl-, Ethyl-, Butyl-, Isobutyl-, Ethylhexyl-, Cyclohexyl- und/oder Lauryl(meth)acrylat gewählt werden, weiterhin Styrol, Vinyltoluol und/oder Methylstyrol. Die Herstellung der Copolymere erfolgt über übliche radikalische Lösungspolymerisation, wie sie dem Fachmann bekannt ist. Gearbeitet wird beispielsweise in aprotischen organischen Lösemitteln, z.B. Toluol

und Xylol und Estern, z.B. Butylacetat.

Verwendet hierzu werden im allgemeinen übliche Radikalinitiatoren, wie Peroxide und Azoverbindungen. Die Reaktion erfolgt z.B. unter Erwärmen, beispielsweise auf Temperaturen von 80 bis 140°C.

Das monomere TMI kann in einem Bereich von 2 bis 40 Gew. -%, bezogen auf das Gewicht sämtlicher Monomeren copolymerisiert werden, bevorzugt aber in einem Bereich von 2 bis 25 Gew. -%.

Das Isocyanat-terminierte Copolymer wird anschließend mit einem oder mehreren mit OH- oder sec. NH-funktionalisierten Mono- und/oder Diketeniminen und/oder Mono- und/oder Dialdiminen umgesetzt.

Die Herstellung der Ketimine und/oder Aldimine (im folgenden wird zur Vereinfachung der Ausdruck "Ketimine" gewählt, der jedoch auch Aldimine einschließen soll) erfolgt z.B. durch Umsetzung von Alkanolaminen oder Di- bzw. Triaminen, die mindestens eine primäre Aminogruppe, im Falle der Di- bzw. Triamine zusätzlich eine sekundäre Aminfunktion tragen, mit Aldehyden und/oder Ketonen unter Wasserabspaltung.

Beispiele für Alkanolamine sind: Monoethanolamin, Monopropanolamin, Monohexanolamin oder 2-Amino-2-hydroxy-propan.

Beispiele für Di- bzw. Triamine, die mindestens eine primäre Aminogruppe und eine sekundäre Aminogruppe tragen, sind: N-Methylpropylendiamin, Diethylentriamin, Dipropylentriamin oder Bishexamethylentriamin.

Zur Herstellung der TMI-Acrylat/Ketimin-Addukte müssen die primären Aminogruppen der oben genannten Amine blockiert werden. Hierbei werden die primären Amine mit Aldehyden oder Ketonen unter Wasserabspaltung zu Schiffschen Basen bzw. Aldiminen oder Ketiminen umgesetzt. Beispiele für solche Aldehyde und Ketone sind: $C_3$ - $C_{10}$-Verbindungen wie Hexylaldehyd, Octylaldehyd, Diisopropylketon und/oder Methylisobutylketon. Die beiden letzten Verbindungen sind besonders bevorzugt, weil sie nur eine geringe Tendenz zu Nebenreaktionen zeigen.

Die OH- oder sec.NH-funktionalisierten Mono- oder Diketime werden bei der Anlagerung an das Isocyanat-terminierte Copolymere bevorzugt im Überschuß eingesetzt, bevorzugt werden 90 bis 95 % der Isocyanatgruppen mit OH- oder NH-Gruppen umgesetzt. Die verbleibenden überschüssigen Isocyanatgruppen werden in einem letzten Reaktionsschritt mit Monoalkoholen wie z.B. Ethanol, Propanol oder Butanol urethanisiert.

Zur Synthese der Ketimine- bzw. Aldimine, d.h. der Polyamine, wird beispielsweise ein Alkanolamin oder Di- bzw. Triamin, das sowohl mindestens eine primäre als auch eine sekundäre Aminfunktion trägt, mit dem gewünschten Blockierungsmittel Aldehyd oder Keton in einem organischen Lösemittel, das mit Wasser ein azeotropes Gemisch bildet, vorgelegt. Durch Erhitzen dieses Gemisches wird das entstehende Reaktionswasser azeotrop abdestilliert. Es ist günstig, die Herstellung unter Inertgas durchzuführen. Das Blockierungsmittel kann im Überschuß eingesetzt werden, das im Anschluß an die Reaktion abdestilliert werden kann. Es ist zweckmäßig, als Verkappungsmittel ein Keton/Aldehyd zu wählen, das selbst mit Wasser ein Azeotrop bildet, so daß auf ein zusätzliches organisches Lösemittel verzichtet werden kann.

Zur Addition des OH- bzw. sec.NH-funktionalisierten Ketimins bzw. Aldimins an das Isocyanat-terminierte TMI-Copolymerisat wird das Ketimin bei z.B. 80°C unter Inertgas vorgelegt und das Copolymerisat in z.B. zwei Stunden zudosiert. Mit Hilfe einer Lewis-Säure, wie z.B. Dibutylzinnlaurat, kann die Reaktion gegebenenfalls katalysiert werden. Nach Beendigung der Zudosierung wird, sofern das Ketimin im Unterschuß vorliegt, ein Alkohol, z.B. Butanol zugefügt. Es wird gegebenenfalls noch bei erhöhter Temperatur z.B. etwa 10 bis 30 min. gerührt.

Die vorstehende Herstellungsweise stellt lediglich ein Beispiel für eine Verfahrensweise dar. Es kann beispielsweise auch so gearbeitet werden, daß das Copolymerisat vorgelegt wird und das Ketimin zugesetzt wird.

Es kann zweckmäßig sein, die terminierten Amingruppen der genannten Polyamine mit Aldehyden oder Ketonen unter Wasserabspaltung zu Schiffschen Basen bzw. Aldiminen oder Ketiminen umzusetzen. Hierzu wird analog der bereits beschriebenen Aldimin- bzw. Ketimin-Synthese vorgegangen. Aminofunktionelle Bindemittel können mit acryloylfunktionellen Harzen, epoxyfunktionellen Harzen, acetessigesterfunktionellen Harzen und mit anderen dem Fachmann geläufigen Vernetzern für aminofunktionelle Bindemittel vernetzt werden. Beispiele für acryloylfunktionelle Komponenten wurden bereits bei der Erläuterung der Adduktbildung aus Polyamin mit Acryloyl-Verbindungen beschrieben. Solche acryloylfunktionelle Bindemittel können mit dem Fachmann geläufigen Vernetzern reagieren. Beispiele für solche Vernetzer z.B. CH-acide Vernetzer. Ebenso ist es möglich, eine radikalische Vernetzung zu erzielen, beispielsweise eine oxidative Vernetzung in Gegenwart ungesättigter Fettsäuren, eine Elektronenstrahlhärtung, eine UV-Vernetzung in Gegenwart von üblichen UV-Initiatoren oder eine radikalische Aushärtung:in Gegenwart von thermisch spaltbaren Radikalinitiatoren.

Beispiele für CH-acide Verbindungen werden z.B. hergestellt durch Umesterung eines aliphatischen β-Ketocarbonsäureesters mit einem Polyol.

Geeignete β-Ketocarbonsäureester sind beispielsweise Ester der Acetessigsäure bzw. alkylsubstituierter Acetessigsäure, wie α- und/oder γ-Methylacetessigsäure. Geeignete Ester dieser Säuren sind solche mit aliphatischen Alkoholen, bevorzugt niederen Alkoholen mit 1 bis 4 Kohlenstoffatomen, wie Methanol, Ethanol oder Butanol.

Als Polyole zur Umsetzung mit den β-Ketocarbonsäureestern sind hydroxylfunktionelle Bindemittel und Verbindungen geeignet, wie sie bereits bei den hydroxylfunktionellen Verbindungen beschrieben worden sind.

Die Synthese der CH-aciden Komponente kann beispielsweise über mehrere Stufen erfolgen. Das Polyol wird

zunächst nach Entfernen von gegebenenfalls vorhandenem Lösemittel mit dem aliphatischen β-Ketocarbonsäureester umgeestert.

Bei der Umesterung des Polyols kann beispielsweise so verfahren werden, daß das gegebenenfalls von Lösemittel durch Anlegen eines Vakuums befreite Polyol vorgelegt wird. Der β-Ketocarbonsäureester wird nun im Überschuß zugegeben, beispielsweise zugetropft. Die Reaktion erfolgt bei erhöhter Temperatur; der freigesetzte Alkohol wird aus dem System entfernt.

Zur Beschleunigung der Reaktion ist auch die Zugabe eines Katalysators möglich. Beispiele für derartige Katalysatoren sind Säuren, wie Ameisensäure oder p-Toluolsulfonsäure. Es ist günstig, bei der Umesterung die Reaktionstemperatur kontinuierlich zu erhöhen (beispielsweise in Schritten von 10°C/20 min.), bis eine Temperatur erreicht ist, die knapp (etwa 100°C) unterhalb des Siedepunktes des β-Ketocarbonsäureesters liegt. Nach quantitativer Umesterung wird der überschüssige β-Ketocarbonsäureester entfernt, beispielsweise durch Anlegen eines Vakuums. Anschließend kann das Gemisch abgekühlt und mit einem inerten Lösemittel auf einen gewünschten Festkörpergehalt eingestellt werden.

Das Bindemittel kann zur Viskositätseinstellung auch 2-Acetoacetoxyethylmethacrylat als Reaktivverdünner enthalten. Acetessigesterfunktionalisierte Komponenten können durch Umsetzung der β-Carbonylgruppen mit primären und/oder sekundären Monoaminen in ihrer CH-Acidität verstärkt werden, wie z.B. DE-A-39 32 517 beschrieben.

Das CH-acide Bindemittel enthält gegebenenfalls eingemischt einen oder mehrere Katalysatoren in Form von Lewis-Basen oder Brönstedt-Basen, wobei die konjugierten Säuren der letzten einen pKA-Wert von mindestens 10 haben. Als besonders geeignet erwiesen sich Lewis-Basen, wie z.B. solche der Gruppe von cycloaliphatischen Aminen, wie Diazabicyclooctan (DABCO), tert.-aliphatischen Aminen, wie Triethylamin, Tripropylamin, N-Methyldiethanolamin, N-Methyl-diisopropylamin oder N-Butyl-Diethanolamin, sowie Amidinen wie Diazabicycloundecen (DBU), und Guanidinen, wie z.B. N,N,N',N'-Tetramethylguanidin. Weitere Beispiele sind alkyl- oder arylsubstituierte Phosphane, wie z.B. Tributylphosphan, Triphenylphosphan, Tris-p-Tolylphosphan, Methyldiphenylphosphan, sowie hydroxy- und aminfunktionalisierte Phosphane, wie z.B. Trishydroxymethylphosphan und Tris-dimethylamino-ethylphospan. Beispiele für die einsetzbaren Brönstedt-Basen sind Alkoholate, wie Natrium- oder Kaliumethylat, quartäre Ammoniumverbindungen, wie Alkyl-, Aryl- oder Benzylammoniumhydroxide oder -halogenide, wie z.B. Tetraethyl- oder Tetrabutylammoniumhydroxid oder -fluorid, sowie Trialkyl- oder Triarylphosphniumsalze oder -hydroxide.

Die Menge der Katalysatoren beträgt beispielsweise 0,01 bis 5 Gew.-%, vorzugsweise 0,02 bis 2 Gew.-%, bezogen auf den Gesamtfeststoffgehalt des Bindemittels.

Bei den mit hydroxylfunktionellen Verbindungen vernetzbaren Umesterungsvernetzern handelt es sich um solche, die mindestens zwei umesterungsfähige Gruppen enthalten. Bevorzugt sind die umesterungsfähigen Vernetzer im wesentlichen frei von primären, sekundären oder tertiären Aminogruppen, da diese die Lagerstabilität und die Lichtbeständigkeit negativ beeinflussen können.

Beispiele für umesterungsfähige Bindemittel sind Verbindungen, die im Molekül im Mittel mindestens zwei Gruppen enthalten, die sich von Methantricarbonsäuremonoamideinheiten oder Acetessigester-2-carbonsäureeinheiten ableiten.

Geeignete Verbindungen sind beispielsweise Umsetzungsprodukte von Malonsäurediester wie Malonsäuredimethyl-, diethyl-, dibutyl-, dipentylester oder Acetessigsäureester wie Acetessigsäuremethyl-, ethyl-, butyl-pentylester mit Polyisocyanaten.

Beispiele für derartige Isocyanate sind dem Fachmann geläufig. Es können die gleichen Verbindungen eingesetzt werden, die schon bei der Umsetzung der Grundbausteine mit Polyisocyanaten beschrieben wurden. Als umesterungsfähige Verbindungen eignen sich aber auch Umsetzungsprodukte von Estern und Teilestern mehrwertiger Alkohole der Malonsäure mit Monoisocyanaten. Mehrwertige Alkohole sind z.B. zwei- bis fünfwertige Alkohole wie Ethandiol, die verschiedenen Propan-, Butan-, Pentan- und Hexandiole, Polyethylen- und Polypropylendiole, Glycerin, Trimethylolethan und -propan, Pentaerythrit, Hexantriol und Sorbit. Geeignete Monoisocyanate sind z.B. aliphatische Isocyanate wie n-Butylisocyanat, Octedecylisocyanat, cycloaliphatische Isocyanate wie Cyclohexylisocyanat, araliphatische Isocyanate wie Benzylisocyanat oder aromatische Isocyanate wie Phenylisocyanat.

Geeignet sich auch die entsprechenden Malonester von OH-Gruppen enthaltenden Acrylharzen, Polyestern, Polyurethanen, Polyethern, Polyesteramiden und -imiden und/oder Umsetzungsprodukte von Malonsäurehalbestern wie Malonsäuremonoethylester mit aliphatischen und aromatischen Epoxidharzen, z.B. epoxidgruppenhaltigen Acrylatharzen, Glycidylethern von Polyolen wie Hexandiol, Neopentylglykol, Diphenylolpropan und -methan und Glycidylgruppen enthaltenden Hydantoinen, ferner Gemische dieser Verbindungen.

Weiterhin bevorzugt sind Härtungskomponenten, die man durch nicht quantitative Umesterung von Verbindungen, die mehr als zwei umesterungsfähige Gruppen im Molekül enthalten, mit Polyolen erhält.

Bei den vorstehend genannten Polyolen kann es sich um einen mehrwertigen Alkohol handeln, der vorzugsweise 2 bis 12, insbesondere 2 bis 6 C-Atome enthält. Beispiele hierfür sind: Ethylenglykol, Propylenglykol-(1,2) und -(1,3), Butylenglykol-(1,4) und -(2,3), Di-β-hydroxyethylbutandiol, Hexandiol-(1,6), Octandiol-(1,8), Neopentylglykol, Cyclohexandiol-(1,6), 1,4-Bis-(hydroxymethyl)-cyclohexan, 2,2-Bis- (4-hydroxycyclohexyl)-propan, 2,2-Bis-(4-(β-hydroxyethoxy)-phenyl)-propan, 2-Methyl-1,3-propandiol, Glycerin, Trimethylolpropan, Hexantiol-(1,2,6), Butantriol-(1,2,4), Tris-(β-hydroxyethyl)-isocyanurat, Trimethylolethan, Pentaerythrit und deren Hydroxyalkylierungsprodukten, ferner Diethylenglykol, Triethylenglykol, Tetraethylenglykol, Polyethylenglykole, Dipropylenglykol, Tripropylenglykol, Polypropylenglykole, Dibutylenglykol, Polybutylenglykole und Xylylenglykol. Auch Polyester, die aus oder mit Lactonen, z.B. epsilon-Caprolacton oder Hydroxycarbonsäure, wie z.B. Hydroxypivalinsäure, gamma-Hydroxydecansäure, gamma-Hydroxycapronsäure, Thioglykolsäure erhalten werden, können eingesetzt werden.

Alternativ kann das Polyol eine oligomere oder polymere Polyolverbindung (Polyolharz) darstellen, deren Zahlenmittel des Molekulargewichts Mn (bestimmt mittels Gelchromatographie; Polystyrolstandard), üblicherweise im Bereich von etwa 170 bis 10000, vorzugsweise etwa 500 bis etwa 5000 liegt. In Sonderfällen kann Mn jedoch 10000 g/mol und mehr betragen. Als Oligomer/Polymere kommen dabei Polymerisate, Polykondensate oder Polyadditionsverbindungen in Betracht. Die Hydroxylzahl beträgt im allgemeinen 30 bis 250, vorzugsweise 45 bis 200 und Insbesondere 50 bis 180 mg KOH/g. Diese OH-gruppenhaltigen Verbindungen können gegebenenfalls noch andere funktionelle Gruppen enthalten, wie Carboxylgruppen.

Beispiele für derartige Polyole sind die hydroxylfunktionellen Verbindungen, die bereits an anderer Stelle beschrieben worden sind.

Weitere Beispiele für umesterungsfähige Verbindungen können beispielsweise durch Veresterung eines Polyepoxids mit einem die umesterungsfähige Gruppe bildenden Dicarbonsäuremonoester, z.B. Malonsäuremonoester, hergestellt worden sein. Man erhält so eine Komponente mit einer umesterungsfähigen Gruppe je Epoxidgruppe. Hierbei lassen sich aromatische oder aliphatische Polyepoxide einsetzen.

Weitere Beispiele für geeignete Dicarbonsäuremonoester sind Malonsäuremonoalkylester, Acetondicarbonsäuremonoalkylester wobei der Alkylrest geradkettig oder verzweigt mit 1 bis 6 Atomen, z.B. Methyl, Ethyl, n-Butyl oder t-Butyl sein kann.

Bindemittel mit CH-aciden Gruppen können im Sinne einer Michael-Reaktion mit acryloylfunktionellen Verbindungen vernetzt werden.

Die Bindemittel können in üblichen Lösemitteln hergestellt werden. Es ist günstig, solche Lösemittel zu verwenden, die später bei der Herstellung des Überzugsmittels nicht stören. Es ist auch günstig, den Gehalt an organischen Lösemitteln möglichst gering zu halten.

Der Emulgator kann zur besseren Einbaubarkeit in vernetzende Lacksyteme mit funktionellen Gruppen versehen werden. Beispiele für solche funktionelle Gruppen sind die gleichen, die bereits bei den funktionalisierten Bindemitteln beschrieben worden sind, z.B. Hydroxylgruppen, Carboxylgruppen, Epoxygruppen, Aminogruppen, Acryloylgruppen und CH-acide Gruppen.

Wird der Grundbaustein mit einem Überschuß an Isocyanat modifiziert, kann der modifizierte Emulgator noch OH-Gruppen enthalten. Im Falle eines Überschusses an Isocyanat wird hingegen der modifizierte Emulgator isocyanatfunktionell. Die neu einzuführenden funktionellen Gruppen können daher entweder über verbleibende Hydroxylgruppen oder über die Isocyanatgruppen an den Emulgator gebunden werden.

Wird z.B. bei der Umsetzung des Grundbausteins mit Polyisocyanat noch ein weiteres Polyol zugegeben, kann es über eine Urethanbindung an den Emulgator gebunden werden. Beispiele für geeignete mehrwertige Alkohole sind beispielsweise Ethylenglykol, 1,2- und 1,3-Propylenglykol, 1,3-, 1,4-, 2,3-Butandiol, 1,6-Hexandiol, 2,5-Hexandiol, Trimethylhexandiol, Diethylenglykol, Triethylenglykol, hydrierte Bisphenole, 1,4-Cyclohexandiol, 1,4-Cyclohexandimethanol, Neopentylglykol, Tricyclodecandiol, 1,4-Butandiol, Trimethylolpropan, Glycerin, Pentaerythrit, Trimethylpentandiol, Dipentaerythrit und Gemische dieser oder anderer mehrwertiger Alkohole.

Ebenso ist es möglich, Polyesterpolyole, Polyetherpolyole etc. über die Urethangruppe mit dem Emulgator zu verknüpfen.

Hydroxylfunktionelle Emulgatoren können mit allen Vernetzern, die zur Reaktion mit OH-Gruppen befähigt sind, reagieren, Beispiele für solche Vernetzer wurden bereits als Vernetzer für hydroxylfunktionelle Bindemittel beschrieben.

Carboxylgruppen können in den Emulgator eingeführt werden durch Umsetzung eines wie oben beschriebenen hydroxylfunktionellen Emulgators mit Polycarbonsäuren bzw. deren Anhydriden. Beispiele für geeignete Polycarbonsäuren (Anhydride) sind Phthalsäure(anhydrid), Isophthalsäure, Terephthalsäure, Tetrahydrophthalsäure(anhydrid), Hexahydrophthalsäure(anhydrid), 1,3- und 1,4-Cyclohexandicarbonsäure, Maleinsäure(anhydrid), Bernsteinsäure(anhydrid), Fumarsäure, Adipinsäure, Sebacinsäure, Azelainsäure, Dimerfettsäuren, Trimerfettsäuren, Trimellithsäure(anhydrid), Pyromellithsäure(anhydrid) und Gemische dieser oder anderer Säuren. Aliphatische und cycloaliphatische Dicarbonsäuren bzw. Anhydride sind bevorzugt.

Die Umsetzung der hydroxylfunktionellen Emulgatoren mit den Polycarbonsäuren bzw. Anhydriden erfolgt beispielsweise so, daß der hydroxylfunktionelle Emulgator in der Schmelze oder in einem aprotischen Lösemittel mit Polycarbonsäure(Anhydrid) gemischt wird und beispielsweise bei 100 bis 190°C bis zur gewünschten Säurezahl umgesetzt wird. Als Lösemittel können die gleichen eingesetzt werden, die bereits bei der Umsetzung der Grundbausteine mit Polyisocyanaten beschrieben wurden.

Die carboxylfunktionellen Emulgatoren können mit dem Fachmann geläufigen Vernetzern für carboxylgruppenhaltige Verbindungen vernetzt werden. Solche Vernetzer sind bereits als Vernetzer für carboxylfunktionelle Bindemittel beschrieben worden.

Aminogruppen können ebenfalls über das Polyisocyanat in den Emulgator eingebaut werden. Dazu wird das Polyisocyanat vor, während oder nach der Umsetzung mit des Grundbausteins mit einem oder mehreren OH- oder sec.NH-funktionalisierten Mono- und/oder Diketeniminen und/oder Mono- und/oder Dialdiminen umgesetzt. Bei der Überführung in Wasser hydrolysieren die Ketimine/Aldimine und die Aminogruppen werden frei. Eine andere Möglichkeit ist die Umsetzung von acryloylfunktionellen Emulgatoren mit Polyaminen. Eine weitere Möglichkeit besteht darin, die Polyisocyanate bis zu einem gewissen Grad mit dem Grundbaustein umzusetzen und den so funktionalisierten isocyanatfunktionellen Emulgator dann in Wasser zu überführen. Hier erfolgt dann die Hydrolyse der NCO-Gruppen zur Aminogruppe unter $CO_2$-Abspaltung.

Epoxygruppen können in den Emulgator eingeführt werden durch Umsetzung von hydroxylfunktionellen Emulgatoren mit z.B. Epichlorhydrin. Eine andere Möglichkeit ist die Umsetzung von Epoxypolyolen mit den zur Modifikation eingesetzten Polyisocyanaten. Diese Umsetzung kann vor, während oder nach der Umsetzung der Polyisocyanate mit den Grundbausteinen erfolgen.

Acryloylgruppen können in den Emulgator eingeführt werden durch Umsetzung der Polyisocyanatgruppen des Emulgators mit hydroxylfunktionellen (Meth)acrylmonomeren. Diese Umsetzung kann vor, während oder nach der Reaktion der Polyisocyanate mit den Grundbausteinen durchgeführt werden. Beispiele für einsetzbare hydroxylfunktionelle (Meth)acrylate sind Monomere mit primären und sekundären Hydroxyfunktionen, wie sie bereits beschrieben wurden. Die Umsetzung der Polyisocyanate mit den hydroxylfunktionellen Monomeren erfolgt beispielsweise so, daß das Polyisocyanat lösemittelfrei oder in einem aprotischen Lösemittel mit dem hydroxylfunktionellen Monomer tropfenweise versetzt wird und beispielsweise bei 40 bis 80°C bis zur gewünschten NCO-Zahl umgesetzt wird. Als Lösemittel können die gleichen eingesetzt werden, die bereits bei der Umsetzung der Grundbausteine mit Polyisocyanaten beschrieben wurden. Ebenso ist es möglich, die hydroxylfunktionellen Monomeren zusammen mit den Grundbausteinen vorzulegen und gemeinsam mit den Polyisocyanaten umzusetzen oder die hydroxylfunktionellen Monomeren nach teilweiser Umsetzung der Polyisocyanate mit den Grundbausteinen zuzudosieren.

CH-acide Gruppen können in den Emulgator auf verschiedenen Wegeneingeführt werden. So ist es möglich, einen hydroxylfunktionellen Emulgator mit einem β-Ketocarbonsäureester wie z.B. Acetessigsäureethylester unter Umesterung umzusetzen. Bei der Umesterung des hydroxylfunktionellen Emulgators mit einem β-Ketocarbonsäureester kann beispielsweise so verfahren werden, daß der Grundbaustein vorgelegt wird und der β-Ketocarbonsäureester nun im Überschuß zugegeben, beispielsweise zugetropft wird. Die Reaktion erfolgt bei erhöhter Temperatur, der freigesetzte Alkohol wird aus dem System entfernt.

Zur Beschleunigung der Reaktion ist auch die Zugabe eines Katalysators möglich. Beispiele für derartige Katalysatoren sind Säuren, wie Ameisensäure oder p-Toluolsulfonsäure. Es ist günstig, bei der Umsetzung die Reaktionstemperatur kontinuierlich zu erhöhen (beispielsweise in Schritten von 10°C/20 min.) bis eine Temperatur erreicht ist, die knapp (etwa 100°C) unterhalb des Siedepunktes des β-Ketocarbonsäureesters liegt. Nach quantitativer Umesterung wird der überschüssige β-Ketocarbonsäureester entfernt, beispielsweise durch Anlegen eines Vakuums. Anschließend kann das Gemisch abgekühlt und mit einem inerten Lösemittel auf einen gewünschten Festkörpergehalt eingestellt werden.

Ebenso ist es möglich, die CH-aciden Gruppen durch Umsetzung der Polyisocyanate mit CH-aciden Verbindungen wie Acetessigsäureethylester oder Malonsäurediethylester einzuführen. Die Modifikation mit CH-aciden Gruppen kann vor, während oder nach der Umsetzung der Grundbausteine mit Polyisocyanaten erfolgen. Die Umsetzung der Polyisocyanatgruppen des Emulgators mit den CH-aciden Verbindungen erfolgt beispielsweise so, daß der Polyisocyanat-funktionelle Emulgator lösemittelfrei oder in einem aprotischen Lösemittel mit der CH-aciden Verbindung tropfenweise versetzt wird und beispielsweise bei 60 bis 100°C bis zur gewünschten NCO-Zahl umgesetzt wird. Als Lösemittel können die gleichen eingesetzt werden, die bereits bei der Umsetzung der Grundbausteine mit Polyisocyanaten beschrieben wurden. Ebenso ist es möglich, die CH-aciden Verbindungen mit den Polyisocyanaten umzusetzen oder die CH-aciden Verbindungen nach teilweiser Umsetzung der Polyisocyanate mit den Grundbausteinen zuzudosieren. Gegebenenfalls ist es ratsam, die Umsetzung mit den CH-aciden Verbindungen zu katalysieren. Bei den eingesetzten Katalysatoren für die Umsetzung der Polyisocyanate mit CH-aciden Verbindungen handelt es sich bevorzugt um Alkalialkoholate wie z.B. Lithiummethanolat oder um Alkalihydroxide, beispielsweise Alkalimetallhydroxide, wie Lithium-, Natrium- und/oder Kaliumhydroxid. Bevorzugt werden die wasserfreien Alkalimetallhydroxide eingesetzt. Besonders bevorzugt wird Lithiumhydroxid verwendet. Die Katalysatoren werden in katalytischen Mengen eingesetzt, beispielsweise in Mengen von 0,1 bis 2 Gew.-%, bevorzugt 0,3 bis 1 Gew.-%, bezogen auf das Gewicht von Isocyanat und CH-acider Komponente.

Die Katalysatoren werden in fester Form, beispielsweise pulverisiert, eingesetzt.

Zur Herstellung der Emulsionen eignen sich prinzipiell alle gängigen Verfahren, die dem Fachmann bekannt sind, wie z.B. Rührprozesse mit schnellaufenden Flügelrührern und Dispergierscheiben (glatt oder gezahnt), Rotor-Stator-Aggregaten (Ultra-Turrax, Cavitron, Supratron, Siefer-Trigonal-Maschine, Kolloidmühlen), Geräte, die mit Eindüsung der zu emulgierenden Phase in die äußere Phase arbeiten oder bei denen beide Phasen unter hohem Druck und gegenläufiger Eindüsung zur Kollision gebracht werden, Ultraschallhomogenisatoren, Hochdruckhomogenisatoren und statische Mischer. Die Emulgierung kann nach dem direkten und dem inversen Verfahren erfolgen. Sie kann kontinuierlich und diskontinuierlich durchgeführt werden. Bevorzugte Verfahrensweise ist die kontinuierliche Emulsionsherstellung unter Verwendung von Eindüsungen, Hochdruckhomogenisatoren, Ultraschallhomogenisatoren und In-Line-Rotor-Stator-Homogenisatoren, bei denen die beiden Phasen in einem der endgültigen Rezeptur entsprechendem Verhältnis der Teil-Volumenströme in das Homogenisieraggregat dosiert werden. Besonders bevorzugt wird die direkte Emulgierung unter Anwendung der kontinuierlichen Verfahrensweise mit In-Line-Rotor-Stator-Maschinen (Cavitron). Aufbau und Wirkungsweise solcher Maschinen sind dem Fachmann bekannt. Die Rotor-Stator-Maschinen können entweder mit geschlitzten oder gelochten Ringen oder einer Kombination aus beiden bestückt sein. Zur Steigerung der Emulgierwirkung kann bei der Emulsionsherstellung zunächst auf einen Teil der endgültigen Menge der Wasserphase verzichtet werden, der nach erfolgter Emulgierung dem Konzentrat zugesetzt wird. Dies geschieht entweder batchweise in einem Vorlagetank oder bevorzugt kontinuierlich durch Zudosierung der noch fehlenden Wassermenge in den laufenden Prozeß im Anschluß an das Homogenisieraggregat oder in einer der äußeren Rotor-Stator-Stufen. Ein Vorteil dieser Verfahrensweise ist, daß das Emulsionskonzentrat unmittelbar nach seiner Entstehung auf Temperaturen von z.B. 30°C gekühlt wird, bei denen eine Beeinträchtigung der Emulsionsqualität durch hohe Temperaturen, die infolge der Scherkräfte entstehen, nicht mehr zu befürchten ist. Die erfindungsgemäß zu verwendenden Emulgatoren können bei der Emulgierung entweder komplett mit der Bindemittelphase, komplett mit der Wasserphase oder auf beide Phasen verteilt eingesetzt werden. Bevorzugt werden sie aus physikalischen Gründen, die dem Fachmann bekannt sind, mit der Wasserphase oder auf die beiden Phasen verteilt eingesetzt.

**Beispiele** (Alle Teile beziehen sich auf das Gewicht)

Als Bindemittel wird der OH-funktionelle lösemittelfreie Polyester Desmophen® 670 (Handelsprodukt der Firma Bayer AG) mit einer OH-Zahl von 142 mg KOH/g und einer Säurezahl von 2 mg KOH/g eingesetzt.

**Herstellung eines Grundbausteins**

Die Synthese erfolgt analog einem Verfahren beschrieben in der US-A-2 380 166 (dort Example 2 und 4): In einem 4 Liter-Dreihalskolben, der mit Rückflußkühler, Thermometer und Rührer versehen ist, werden 800 Teile Laurinsäure und 782 Teile Sorbitol in Gegenwart von 5 Teilen Natronlauge unter Rühren innerhalb von 70 Minuten unter Inertgasatmosphäre auf 250°C erhitzt und 5 Stunden unter diesen Konditionen gehalten. Dann werden 30 Teile Aktivkohle zugeführt und anschließend filtriert. Das entstandene wachsartige Produkt hat eine theoretische OH-Zahl von 486 mg KOH/g. 346 Teile dieses Produktes werden geschmolzen und in einen mit Rührer ausgestatteten Autoklaven gegeben. Es wird auf 100°C erhitzt und 17 Teile Kaliummethanolat zugeführt. Es wird auf 110°C erhitzt und in einem Zeitraum von 150 Minuten 2200 Teile flüssiges Ethylenoxid zugetropft. Die Temperatur wird in einem Bereich von 105°C und 110°C gehalten, bis alles Ethylenoxid umgesetzt worden ist. Als Indikator dient hierbei der Rückgang des Druckes im Autoklaven auf Normaldruck. Das erhaltene Produkt wird anschließend unter Vakuum (10 mm Quecksilbersäule) und Rühren durch Wasserdampfdestillation gereinigt. Zuletzt werden 30 Teile Aktivkohle zugegeben, noch 15 Minuten gerührt und filtriert. Das erhaltene Produkt ist wachsartig und besitzt eine honiggelbe Farbe. Das Zahlenmittel des Molekulargewichts (GPC-Polystyrolstandard) liegt bei 2400, das Gewichtsmittel bei 3100. Die gemessene OH-Zahl liegt bei 68 mg KOH/g.

**Beispiel 1**

Herstellung eines Isocyanat-kettenverlängerten Emulgators auf der Basis des oben beschriebenen Grundbausteins In einem 2-Liter-4-Halskolben, der mit Rührer, Rückflußkühler, Thermometer und Dosiertrichter versehen ist, werden 938 Teile des obigen Grundbausteins bei 60°C aufgeschmolzen. In die Schmelze werden anschließend in einem Zeitraum von 1 Stunde bei 60°C 62 Teile kontinuierlich Isophorondiisocyanat zudosiert. Es wird auf 80°C geheizt und bei dieser Temperatur gerührt, bis die NCO-Zahl unter 0,1 % gefallen ist. Das Produkt hat dann ein MW (Gewichtsmittel des Molekulargewichts) von 23.000 (GPC mit Polystyrolstandard).

**Verwendung der Emulgatoren**

Diskontinuierliche Emulgierung

Allgemeine Verfahrensweise

300 Teile des o.g. Bindemittels werden auf 60°C erwärmt und unter hochtourigem Rühren (Getzmann-Dispermat, 6-Flügelrührer, Durchmesser: 35 mm, Umfangsgeschwindigkeit: 14,7 m/s bei einer Drehzahl von 8000 U/min) in 150 Teile einer auf 40°C erwärmten wässrigen Lösung von 27 Teilen Emulgator, entsprechend 9 % bezogen auf die Harzphase, gegossen. Die Zugabe hat so zu erfolgen, daß das Harz "in dünnem Strahl" auf die Rührerperipherie gegossen wird. Der Rührer ist so zu plazieren, daß ein Maximum an Turbulenz entsteht. Nach beendeter Zugabe läßt man die noch warme Emulsion unter mäßigem Rühren auf Raumtemperatur abkühlen.

Vergleichsbeispiel 1

Herstellung einer Emulsion unter Verwendung des o.g. Grundbausteins, Verfahrensweise wie oben angegeben. Die Emulsion ist nicht stabil. Teilchengröße: nicht meßbar,

Vergleichsbeispiel 2

Herstellung einer Emulsion unter Verwendung des Grundbausteins wie in Vergleichsbeispiel 1, jedoch mit von 9% auf 15 % erhöhtem Emulgatorgehalt. Die Emulsion ist nicht stabil. Teilchengröße: ca 50 - 150 μm (mikroskopisch).

**Beispiel 2**

Herstellung einer Emulsion unter Verwendung eines polymeren Emulgators gemäß Beispiel 1.
Emulgator aus Synthesebeispiel 1, Verfahrensweise wie oben angegeben. Die Emulsion ist stabil. Teilchengröße: 0,5-5μm (mikroskopisch).

**Beispiel 3**

Kontinuierliche Emulsionsherstellung.

Zusammensetzung der Emulsion wie in Beispiel 2.

Die Emulgierung erfolgt unter Verwendung eines CAVITRON-In-Line-Rotor-Stator-Homogenisators mit folgender Bestückung:

| | | | |
|---|---|---|---|
| Rotor 1 | Flügelrad | Stator 1 | schlitzter-Ring |
| Rotor 2 | geschlitzter Ring | Stator 2 | Lochring, Loch 1,5mm |
| Rotor 3 | Lochring, Loch 1,5 mm | Stator 3 | Lochring, Loch 0,5mm |
| Rotor 4 | Lochring, Loch 0,5 mm | | |

Die Drehzahl beträgt 6000 U/min. entsprechend einer Umfangsgeschwindigkeit von 25 m/s, bezogen auf den äußeren Rotorring. Harz- und Wasserphase werden im Verhältnis 2 : 1 bei einer Gesamtförderleistung von 30 kg/h über Dosierpumpen in die Anlage gefördert. Der Emulgator aus Beispiel 1 wird dabei im Verhältnis 1 : 1 auf beide Phasen verteilt. Sein Anteil, bezogen auf die Harzphase, beträgt dabei 9 %. Ein Druckhalteventil am Homogenisatorausgang sorgt für einen Anlagendruck von ca. 1,5 bar um zu verhindern, daß die Maschine während des Betriebs unabhängig von den durch die Dosierpumpen vorgegebenen Volumenströmen Material ansaugt. Das emulgatorhaltige Harz wird auf 70°C erwärmt, die emulgatorhaltige Wasserphase hat Raumtemperatur (23°C). Die Emulsion wird direkt nach Verlassen des Homogenisators in einer Kühlstrecke auf Raumtemperatur abgekühlt. Teilchengröße der Emulsion: 0,5-2,5 μm (mikroskopisch).

**Beispiel 4**

Kontinuierliche Emulsionsherstellung, Variante von Beispiel 3 Die Durchführung entspricht der in Beispiel 3 mit dem Unterschied, daß ein zusätzlicher Stator 4 mit Löchern 0,5 mm installiert wird mit dem Ziel, den Wasseranteil, um den die Wasserphase vorher zum Zwecke der effektiveren Übertragung der Scherkräfte reduziert worden ist (entsprechend 15% der gesamten Wassermenge ohne Emulgator), an dieser Stelle zwischen Rotor 4 und Stator 4 in das bereits fertige Emulsionskonzentrat einzudosieren. Hierdurch wird erreicht, daß dem Konzentrat schnell Wärme entzogen wird und eventuell vorhandene Emulsionsanteile vom Typ "Wasser-in-Öl" nach "Öl-in-Wasser" reinvertiert werden. Teilchengröße: ca. 0,5-1,5 μm (mikroskopisch).

Beurteilung der Emulsionen

| | Vergleichsbeispiele | | Beispiele | | |
|---|---|---|---|---|---|
| | 1 | 2 | 2 | 3 | 4 |
| Teilchen-größe* | nm<br>n.i.O. | 50-150<br>n.i.O. | 0,5-5<br>i.O. | 0,5-2,5<br>i.O. | 0,5-1,5<br>i.O. |

* in μm, mikroskopisch
nm: nicht meßbar
i.O.: in Ordnung
n.i.O..: nicht in Ordnung

## Patentansprüche

1. Wäßrige Kunstharzemulsionen enthaltend nicht- ionische Emulgatoren auf der Basis von Fettsäureestern polyalkoxylierter mehrwertiger Alkohole als Grundbausteinen, dadurch gekennzeichnet, daß in den Emulgatormolekülen mindestens zwei solche Grundbausteine durch Umsetzung von Hydroxylgruppen mit einem Polyisocyanat unter Bildung von Urethanbindungen miteinander verknüpft sind.

2. Wäßrige Kunstharzemulsionen nach Anspruch 1, dadurch gekennzeichnet, daß die mehrwertigen Alkohole polyethoxyliert und/oder polypropoxyliert sind.

3. Wäßrige Kunstharzemulsionen nach Anspruch 1 oder 2, dadurch gekennzeichnet, daß die mehrwertigen Alkohole mindestens teilweise Glycerin und/oder Sorbitol sind.

4. Wäßrige Kunstharzemulsionen nach einem der Ansprüche 1 bis 3, dadurch gekennzeichnet, daß die durch Polyisocyanat verknüpften Grundbausteine der allgemeinen Formel

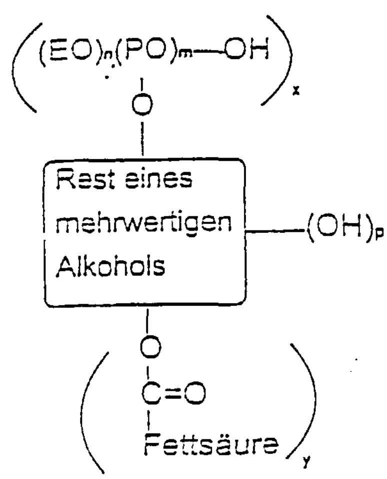

entsprechen,
in der EO eine Ethoxyleinheit und PO eine Propoxyleinheit bezeichnen und den Indizes folgende Bedeutung zukommt:

$x \geq 1$
$y \geq 1$
$p = 1 - 5$
$n = 0 - 300$
$m = 0 - 300$
$n + m \geq 25$

**5.** Verfahren zur Herstellung wäßriger Kunstharzemulsionen nach einem der Ansprüche 1-4, dadurch gekennzeichnet, daß man Kunstharz, Wasser und einen nicht-ionischen Emulgatore auf Basis von Fettsäureestern polyalkoxylierter mehrwertiger Alkohole als Grundbausteinen, wobei in den Emulgatormolekülen mindestens zwei solche Grundbausteine durch Umsetzung von Hydroxylgruppen mit Polyisocyanaten unter Bildung von Urethangruppen miteinander verknüpft sind, kontinuierlich oder diskontinuierlich vermischt.

**6.** Verfahren nach Anspruch 5, dadurch gekennzeichnet, daß die durch Polyisocyanate miteinander verknüpften Grundbausteine der allgemeinen Formel

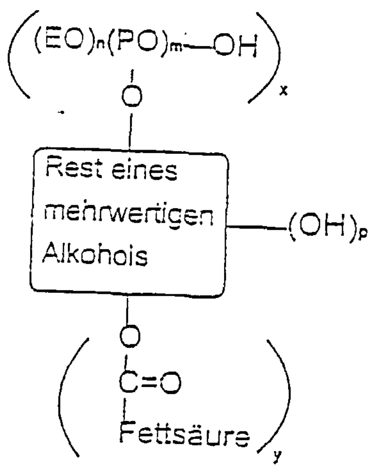

entsprechen,
in der EO einen Ethoxylrest und PO einen Propoxylrest bezeichnen und den Indizes folgende Bedeutung zukommt;

$x \geq 1$
$y \geq 1$
$p = 1 - 5$
$n = 0 - 300$
$m = 0 - 300$
$n + m \geq 25$

**7.** Verwendung der in den Ansprüchen 1 bis 4 definierten Emulgatoren zur Emulgierung von Lackbindemitteln.

**Claims**

**1.** Aqueous synthetic resin emulsions containing nonionic surfactants based on fatty acid esters of polyalkoxylated polyhydric alcohols as the fundamental structural units, characterised in that, in the emulsifier molecules, at least two such fundamental structural units are linked together by the reaction of hydroxyl groups with a polyisocyanate to form urethane bonds.

**2.** Aqueous synthetic resin emulsions according to claim 1, characterised in that the polyhydric alcohols are polyethoxylated and/or polypropoxylated.

3. Aqueous synthetic resin emulsions according to claim 1 or 2, characterised in that the polyhydric alcohols at least in part comprise glycerol and/or sorbitol.

4. Aqueous synthetic resin emulsions according to one of claims 1 to 3, characterised in that the fundamental structural units linked by polyisocyanate are of the general formula

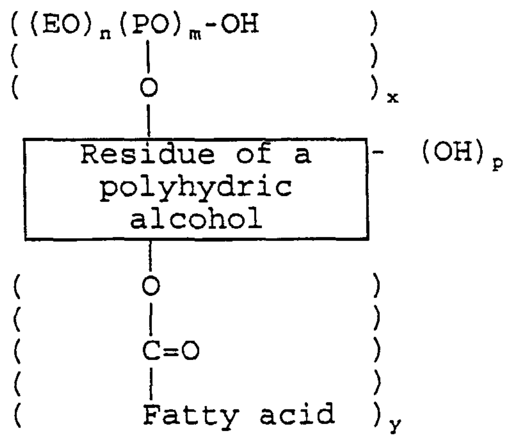

in which EO denotes an ethoxyl unit and PO a propoxyl unit and the indices are assigned the following meaning:

$x \geq 1$
$y \geq 1$
$p = 1\text{-}5$
$n = 0\text{-}300$
$m = 0\text{-}300$
$n + m \geq 25$.

5. Process for the production of aqueous synthetic resin emulsions according to one of claims 1-4, characterised in that synthetic resin, water and a nonionic surfactant based on fatty acid esters of polyalkoxylated polyhydric alcohols as the fundamental structural units, wherein in the emulsifier molecules at least two such fundamental structural units are linked together by the reaction of hydroxyl groups with a polyisocyanate to form urethane groups, are mixed together continuously or discontinuously.

6. Process according to claim 5, characterised in that the fundamental structural units linked together by polyisocyanates are of the general formula

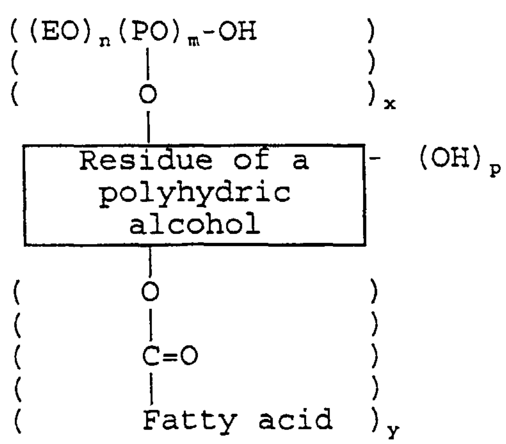

in which EO denotes an ethoxyl unit and PO a propoxyl unit and the indices are assigned the following meaning:

x ≥ 1
y ≥ 1
p = 1-5
n = 0-300
m = 0-300
n + m ≥ 25 .

**7.** Use of the emulsifiers defined in claims 1 to 4 for emulsifying lacquer binders.

## Revendications

**1.** Emulsions de résine synthétique aqueuse contenant des émulsifiants non ioniques à base d'esters d'acides gras d'alcools polyvalents polyalcoxylés comme constituants de base, caractérisées en ce que dans les molécules d'émulsifiant, au moins deux constituants de base de ce genre sont reliés entre eux par réaction de groupes hydroxyle avec un polyisocyanate avec formation de liaisons uréthanes.

**2.** Emulsions aqueuses de résine synthétique selon la revendication 1, caractérisées en ce que les alcools polyvalents sont polyéthoxylés et/ou polypropoxylés.

**3.** Emulsions aqueuses de résine synthétique selon la revendication 2, caractérisées en ce que les alcools polyvalents sont au moins en partie la glycérine et/ou le sorbitol.

**4.** Emulsions aqueuses de résines synthétique selon l'une des revendications 1 à 3, caractérisées en ce que les constituants reliés par l'intermédiaire d'un polyisocyanate correspondent à la formule générale

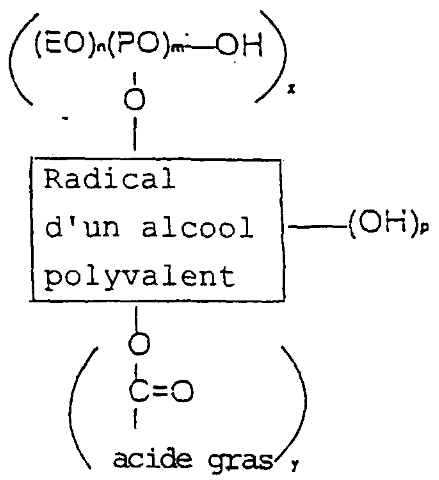

dans laquelle EO représente une unité éthoxyle et PO une unité propoxyle, et les indices ont la signification suivante :

x ≥ 1
y ≥ 1
p = 1-5
n = 0-300
m = 0-30
n + m ≥ 25

**5.** Procédé de préparation d'émulsions aqueuses de résines synthétiques selon l'une des revendication 1 à 4, caractérisé en ce qu'on mélange de façon continue ou discontinue la résine synthétique, l'eau et un émulsifiant non ionique à base d'esters d'acides gras d'alcools polyvalents polyalcoxylés comme constituants de base, où dans les molécules d'émulsifiant au moins deux constituants de base de ce genre sont reliés entre eux par réaction de groupes hydroxyles avec un polyisocyanate avec formation de liaisons uréthane.

6. Procédé selon la revendication 5, caractérisé en ce que les polyisocyanates sont reliés entre eux par des constituants de base de formule générale

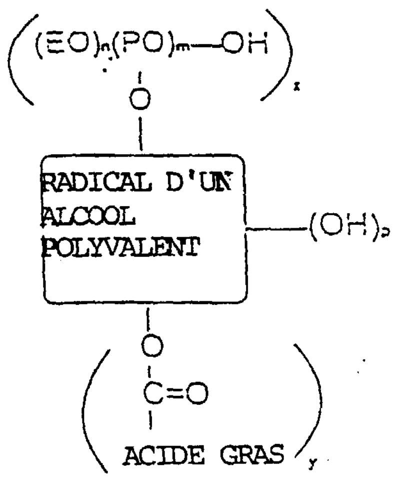


dans laquelle EO représente une unité éthoxyle et PO une unité propoxyle, et les indices ont la signification suivante :

$x \geq 1$
$y \geq 1$
$p = 1\text{-}5$
$n = 0\text{-}300$
$m = 0\text{-}30$
$n + m \geq 25$

7. Utilisation des émulsifiants définis dans les revendications 1 à 4 pour l'émulsification de liants de vernis.